# EUROPÄISCHE PATENTANMELDUNG

(11) **EP 0 541 928 A1**
(43) Veröffentlichungstag der Anmeldung: **19.05.1993**
(21) Anmeldenummer: 92115666.7
(22) Anmeldetag: 14.09.1992
(51) Int. Cl.: B64D 9/00

(54) **Vorrichtung zur Lastverriegelung in Flugzeugen**

(30) Priorität: 11.11.1991 DE 4136973
(71) Anmelder: Deutsche Aerospace Airbus Gesellschaft mit beschränkter Haftung, D-21129 Hamburg (DE)
(72) Erfinder: Boggenstall, Ludger, W-2800 Bremen (DE); Danczyk, Bernd, W-2870 Delmenhorst (DE)

(57) **Zusammenfassung**

Die vorgeschlagene Vorrichtung dient zur Verriegelung einer Last (1) im Bereich eines Flugzeugfrachtraumes. Die Vorrichtung ist dazu mit mindestens einem positionierbaren Verriegelungselement (2) versehen, das relativ zu einem Rahmen (3) beweglich gelagert ist. Im Bereich des Rahmens ist ein mit einer Überwachungseinheit (6) verbundener Sensor (4) angeordnet, der mindestens eine Verriegelungspositionierung und eine Entriegelungspositionierung unterscheidbar detektiert.

## Beschreibung

Die Erfindung betrifft eine Vorrichtung Lastverriegelung im Bereich eines Flugzeugfrachtraumes, die mindestens ein positionierbares Verriegelungselement aufweist, das relativ zu einem Rahmen beweglich gelagert ist.

Bei einem Transport von Frachten in Flugzeugen ist es erforderlich, die Frachten nach einer vorgesehenen Positionierung innerhalb des Frachtraumes zu sichern. Dies ist insbesondere deshalb von Bedeutung, weil bei einem Auftreten von Luftturbulenzen sowie bei Start- und Landephasen erhebliche Kräfte auf die Lasten einwirken, die zu einer Positionsveränderung relativ zum Frachtraum führen können. Auftretende Veränderungen der Lastenverteilung im Bereich des Frachtraumes führen zu einer erheblichen Gefährdung der Flugsicherheit.

Es sind deshalb Verriegelungssysteme für Lasten bekannt, die beispielsweise in Ausnehmungen eingreifen und im Bereich der Lasten bzw. im Bereich von Behältern zur Lastenaufnahme vorgesehen sind. In einem verriegelten Zustand wird hierdurch ein Formschluß zwischen der Verriegelungseinheit und der Last hergestellt.

Im Bereich von großvolumigen Frachträumen ist es nach einer Durchführung der Beladung in der Regel nicht möglich, gesicherte Aussagen bezüglich des Verriegelungszustandes der Lasten zu erhalten. Darüber hinaus kann nicht ausgeschlossen werden, daß bei einer Be- oder Entladung des Frachtraumes im Bereich einer Transportebene angeordnete Antriebseinheiten aktiviert werden, obwohl die betreffende Last noch verriegelt ist. Dies kann zu Beschädigungen sowohl im Bereich der Last als auch im Bereich der Antriebseinheit führen.

Aufgabe der vorliegenden Erfindung ist es daher, eine Vorrichtung der einleitend genannten Art derart zu verbessern, daß eine Überwachung eines jeweiligen Betriebszustandes ermöglicht wird.

Diese Aufgabe wird erfindungsgemäß dadurch gelöst, daß im Bereich des Rahmens mindestens ein mit einer Überwachungseinheit verbundener Sensor angeordnet ist, der mindestens eine Verriegelungspositionierung und eine Entriegelungspositionierung unterscheidbar detektiert.

Mit Hilfe eines aus dem Sensor und der Überwachungseinheit ausgebildeten Verriegelungssystems ist es möglich, während und nach der Beladung des Frachtraumes zu überwachen, ob sich alle Verriegelungskomponenten eines betreffenden Frachtsystems in einer vorgesehenen verriegelten oder entriegelten Positionierung befinden. Darüber hinaus können aufgrund der vorliegenden Meßinformationen der Sensoren den jeweiligen Verriegelungspositionen zugeordnete Antriebseinheiten derart ein- und ausgeschaltet werden, daß eine Transportbeaufschlagung der Lasten nur in einer entriegelten Positionierung erfolgt. Durch eine Kopplung der Überwachungseinheit mit einer Anzeigeeinheit kann in einfacher Weise eine visuelle Überwachung der Verriegelungszustände durchgeführt werden. Die Kontrolle der Verriegelungszustände ist möglich, ohne daß Bedienpersonal den Frachtraum betreten muß, was insbesondere bei einem Zustand vollständiger Beladung in der Regel auch nicht möglich wäre.

Eine reibungsarme Positionierung des Verriegelungselementes kann dadurch erfolgen, daß das Verriegelungselement über ein Schwenklager verschwenkbar im Bereich des Rahmens geführt ist.

Eine zuverlässige Fixierung der Last in einer verriegelten Positionierung sowohl bezüglich von Längs- als auch bezüglich von Querkräften kann dadurch erfolgen, daß das Verriegelungselement im wesentlichen als eine Verriegelungsklaue ausgebildet ist.

Eine Behinderung der Positionierung der Last in einer entriegelten Positionierung wird dadurch vermieden, daß sich das Verriegelungselement in einem entriegelten Zustand im wesentlichen zwischen zwei den Rahmen bereichsweise ausbildenden Seitenschenkeln erstreckt.

Eine zuverlässige Verriegelung auch bei einem Auftreten von vergleichsweise großen Kräften kann dadurch ermöglicht werden, daß sich das Verriegelungselement in einem verriegelten Zustand mit einem Verriegelungssteg im wesentlichen quer zu den Seitenschenkeln erstreckt.

Eine raumsparende und dennoch stabile Konstruktion wird dadurch ermöglicht, daß der Sensor in einer entriegelten Positionierung des Verriegelungselementes seitlich neben dem Verriegelungselement angeordnet ist.

Eine zuverlässige Detektion von Verriegelungselementen aus unterschiedlichen Materialien kann dadurch ermöglicht werden, daß der Sensor mit einem optischen Detektionselement versehen ist. Es ist aber auch möglich, daß der Sensor mit einem kapazitiven Detektionselement versehen ist. Darüber hinaus kann auch vorgesehen werden, daß der Sensor mit einem induktiven Detektionselement versehen ist.

Zur Vermeidung von Beschädigungen im Bereich von Antriebseinheiten , die zum Transport der Lasten vorgesehen sind, wird vorgeschlagen, daß die Überwachungseinheit zur Ausbildung eines automatisierten Kontroll- und Antriebssystems mit mindestens einer Antriebseinheit zum Transport der Last verbunden ist.

Eine kompakte, preiswerte und zugleich ausreichend stabile Ausführungsform kann dadurch bereitgestellt werden, daß die Seitenschenkel von zwei Querschenkeln miteinander verbunden sind, die sich im wesentlichen senkrecht zu den Seitenschenkeln erstrecken und einen im wesentlichen rechteckförmigen Rahmen ausbilden, der im Bereich einer äußeren Begrenzung des Seitenschenkels mit dem Sensor versehen ist und zur Aufnahme des Detektionselementes des Sensors eine Halterungsausnehmung aufweist.

In den Zeichnungen ist ein Ausführungsbeispiel der Erfindung schematisch dargestellt. Es zeigen:
- Fig. 1: eine perspektivische Darstellung von drei Verriegelungseinheiten, die Sensoren aufweisen, die mit einer Überwachungseinheit verbunden sind,
- Fig. 2: eine Seitenansicht einer Vorrichtung mit verschwenkbarem Verriegelungselement,
- Fig. 3: einen Querschnitt durch eine Vorrichtung, bei der der Sensor mit einer in seitlicher Richtung weisenden Detektionsorientierung angeordnet ist **und**
- Fig. 4: eine Vorrichtung entsprechend der Darstellung in Fig. 3 mit neben dem Sensor angeordnetem Verriegelungselement.

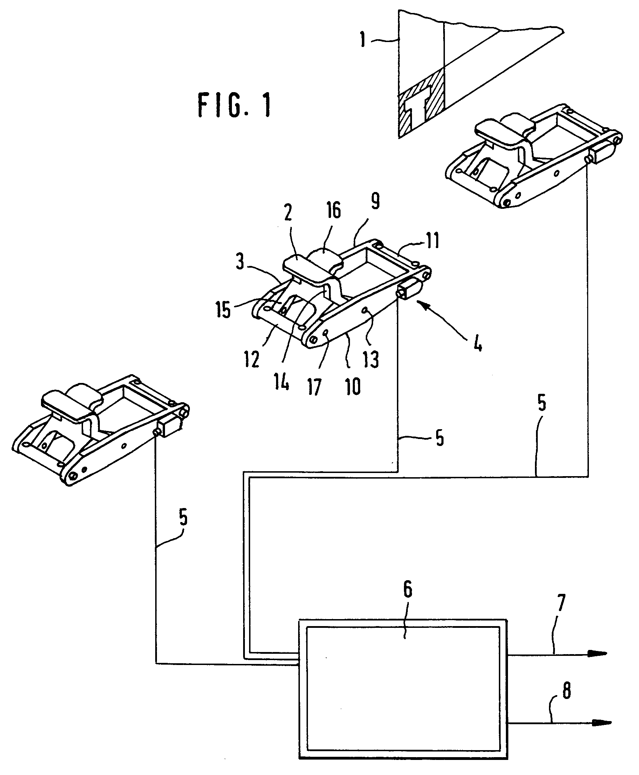

Eine Vorrichtung zur Verriegelung einer Last (1) besteht entsprechend der Darstellung in Fig. 1 im wesentlichen aus einem positionierbaren Verriegelungselement (2), das im Bereich eines Rahmens (3) gelagert ist, der einen Sensor (4) zur Detektion einer Positionierung des Verriegelungselementes (2) trägt. Der Sensor (4) ist über eine Anschlußleitung (5) mit einer Überwachungseinheit (6) verbunden, die einen Steueranschluß (7) zur Verbindung mit einer Transporteinheit sowie einen Anzeigeanschluß (8) zur Verbindung mit einer Anzeigeeinrichtung aufweist.

Bei der Ausführungsform gemäß Fig. 1 besteht der Rahmen (3) aus zwei Seitenschenkeln (9, 10) sowie zwei Querschenkeln (11, 12), die die Seitenschenkel (9, 10) miteinander verbinden. Das Verriegelungselement (2) ist verschwenkbar im Be reich eines Schwenklagers (13) geführt und im wesentlichen als eine Verriegelungsklaue ausgebildet. Das Verriegelungselement (2) weist eine Ausnehmung (14) auf, in die in einer Verriegelungspositionierung ein Anschlagelement (15) mit einer Zunge (16) eingreift. Insbesondere ist daran gedacht, das Anschlagelement (15) schwenkfähig im Bereich eines Lagers (17) zu führen.

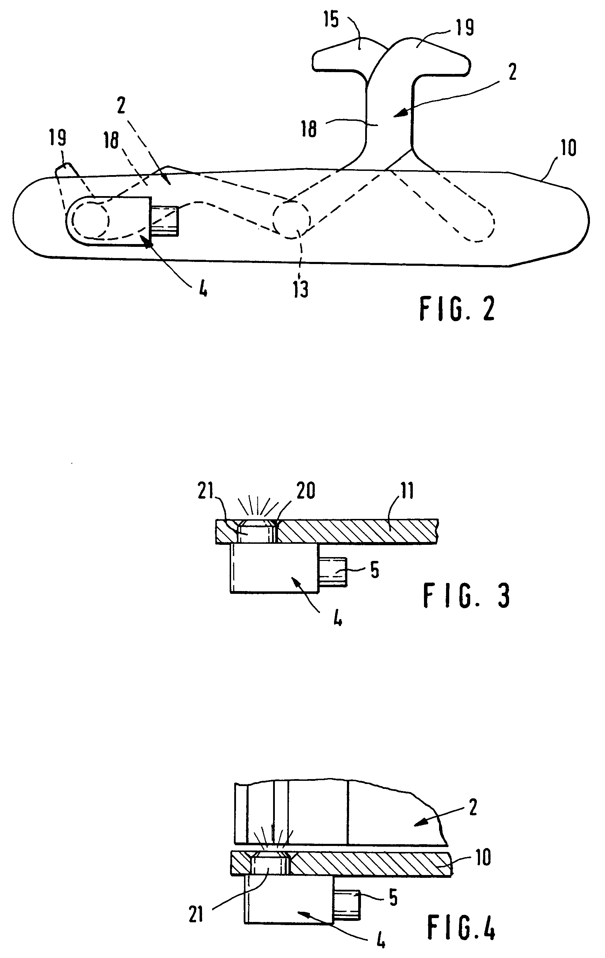

In Fig. 2 ist das Verriegelungselement (2) sowohl in einer Verriegelungspositionierung als auch in einer Entriegelungspositionierung dargestellt. In der Verriegelungspositionierung erstreckt sich ein Verriegelungssteg (18) des Verriegelungselementes (2) im wesentlichen in lotrechter Richtung und das Anschlagelement (15) greift in das Verriegelungselement (2) im Bereich der Ausnehmung (14) ein. In der Entriegelungspositionierung erstreckt sich das Verriegelungselement (2) im wesentlichen zwischen den Seitenschenkeln (9, 10) und ist mit einem Verriegelungsfinger (19) seitlich neben dem Sensor (4) angeordnet. In dieser Positionierung kann das Verriegelungselement (2) vom Sensor (4) beispielsweise optisch, kapazitiv oder induktiv detektiert werden.

Fig. 3 zeigt einen Querschnitt durch den den Sensor (4) tragenden Seitenschenkel (10). Im Bereich des Seitenschenkels (10) ist eine Halterungsausnehmung (20) angeordnet, in die der Sensor (4) mit einem Detektionselement (21) eingreift, das der Last (1) zuwendbar ist.

Aus der Darstellung in Fig. 4 ist ersichtlich, daß das Verriegelungselement (2) in der Verriegelungspositionierung mit einem geringen Abstand zum Detektionselement (21) des Sensors (4) angeordnet ist.

## Patentansprüche

1. Vorrichtung zur Lastverriegelung im Bereich eines Flugzeugfrachtraumes, die mindestens ein positionierbares Verriegelungselement aufweist, das relativ zu einem Rahmen beweglich gelagert ist, dadurch gekennzeichnet, daß im Bereich des Rahmens (3) mindestens ein mit einer Überwachungseinheit (6) verbundener Sensor (4) angeordnet ist, der mindestens eine Verriegelungspositionierung und eine Entriegelungspositionierung unterscheidbar detektiert.

2. Vorrichtung nach Anspruch 1, dadurch gekennzeichnet, daß das Verriegelungselement (2) über ein Schwenklager (13) verschwenkbar im Bereich des Rahmens (3) geführt ist.

3. Vorrichtung nach Anspruch 1 oder 2, dadurch gekennzeichnet, daß das Verriegelungselement (2) im wesentlichen als eine Verriegelungsklaue ausgebildet ist.

4. Vorrichtung nach einem der Ansprüche 1 bis 3, dadurch gekennzeichnet, daß sich das Verriegelungselement (2) in einem entriegelten Zustand im wesentlichen zwischen zwei den Rahmen (3) bereichsweise ausbildenden Seitenschenkeln (9,10) erstreckt.

5. Vorrichtung nach einem der Ansprüche 1 bis 4, dadurch gekennzeichnet, daß sich das Verriegelungselement (2) in einem verriegelten Zustand mit einem Verriegelungssteg (18) im wesentlichen quer zu den Seitenschenkeln (9, 10) erstreckt.

6. Vorrichtung nach einem der Ansprüche 1 bis 5, dadurch gekennzeichnet, daß der Sensor (4) in einer entriegelten Positionierung des Verriegelungselementes (2) seitlich neben dem Verriegelungselement (2) angeordnet ist.

7. Vorrichtung nach einem der Ansprüche 1 bis 6, dadurch gekennzeichnet, daß der Sensor (4) mit einem optischen Detektionselement (21) versehen ist.

8. Vorrichtung nach einem der Ansprüche 1 bis 6, dadurch gekennzeichnet, daß der Sensor (4) mit einem kapazitiven Detektionselement (21) versehen ist.

9. Vorrichtung nach einem der Ansprüche 1 bis 6, dadurch gekennzeichnet, daß der Sensor (4) mit einem induktiven Detektionselement (21) versehen ist.

10. Vorrichtung nach einem der Ansprüche 1 bis 9, dadurch gekennzeichnet, daß die Überwachungseinheit (6) zur Ausbildung eines automatisierten Kontroll- und Antriebssystems mit mindestens einer Antriebseinheit zum Transport der Last (1) verbunden ist.

11. Vorrichtung nach einem der Ansprüche 1 bis 10, dadurch gekennzeichnet, daß die Seitenschenkel (9, 10) von zwei Querschenkeln (11,12) miteinander verbunden sind, die sich im wesentlichen senkrecht zu den Seitenschenkeln (9, 10) erstrecken und einen im wesentlichen recheckförmigen Rahmen (3) ausbilden, der im Bereich einer äußeren Begrenzung des Seitenschenkels (10) mit dem Sensor (4) versehen ist und zur Aufnahme des Detektierungselementes (21) des Sensors (4) eine Halterungsausnehmung (20) aufweist.
